# EUROPEAN PATENT SPECIFICATION

(11) **EP 1 915 274 B1**
(45) Date of publication and mention of the grant of the patent: **04.12.2019**
(21) Application number: 06792908.3
(22) Date of filing: 18.08.2006
(51) Int. Cl.: B60M 1/20

(54) **OVERHEAD LINES FOR RAIL VEHICLES**
HÄNGELEITUNGEN FÜR SCHIENENFAHRZEUGE
LIGNES ÉLECTRIQUES AÉRIENNES POUR VÉHICULES FERROVIAIRES

(30) Priority: 19.08.2005 GB 0517022
(43) Date of publication of application: 30.04.2008
(73) Proprietor: Tram Power Ltd, Liverpool, Merseyside L11 0EE (GB)
(72) Inventor: LESLEY, Lewis, Liverpool, Merseyside L9 6AJ (GB)
(74) Representative: WP Thompson
(86) International application number: PCT/EP2006/065469
(87) International publication number: WO 2007/020297

(56) References cited:
- EP-A- 0 489 627
- EP-A1- 0 820 895
- CH-A- 249 538
- GB-A- 2 096 836
- LUPPI J ET AL: "HISTOIRE DE LA CATENAIRE 25 KV" REVUE GENERALE DES CHEMINS DE FER, CENTRALE DES REVUES DUNOD-GAUTHIER-VILLARS. PARIS, FR, no. 3, 1 March 1992 (1992-03-01), pages 35-52, XP000262989 ISSN: 0035-3183

## Description

The present invention relates to overhead lines for electric vehicles, and in particular to an overhead line installation and to a device for tensioning overhead lines.

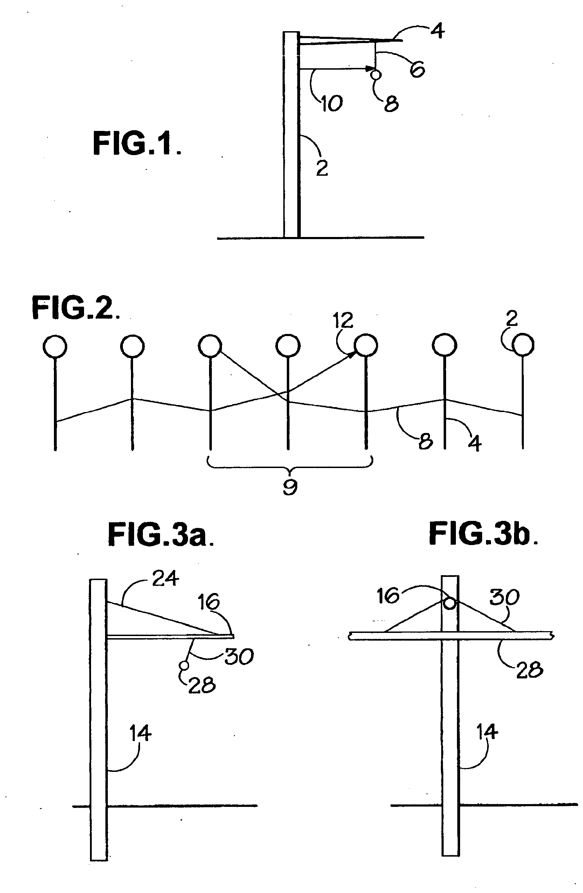

Overhead lines are widely used for transmitting power to electric vehicles of various types including (1) rail vehicles-trains, trams etc; (2) road vehicles such as trolleybuses, mine vehicles etc; and (3) water vehicles including tugs to pull barges and ships in canals. An electrical conductor is suspended above the vehicle's path from a row of upright poles or masts, and the vehicle typically carries a pantograph type mechanism which supports an electrical terminal, urging it upwards against the conductor to form the necessary electrical connection. A conventional suspension arrangement of the type used in existing train installations is schematically illustrated in Figure 1. The mast 2 supports a horizontal bracket arm 4. A vertically extending electrically insulating hanger 6 serves to suspend the electrical line 8 from the bracket arm 4. Lateral stabilisation of the line 8 is provided by means of a horizontal stabilising arm 10 which is beneath the bracket arm 4 and is coupled at one end to a lower part of the hanger 6 and at its other end to the mast 2. As seen in Figure 2, the line is maintained in a shallow "zig-zag" pattern which helps to equalise wear across the width of the vehicle's electrical terminal, since the point of contact between line and terminal moves back and forth across the terminal. This pattern is created by means of the stabilising arms 10. Each end of the line 4 is led to an anchoring arrangement and tension is applied to the line through an end tensioner in a region 12, which pulls along the length of the line and must maintain tension despite for example changes in line length resulting from changes in its temperature. Where the line is self supporting, the rise and fall of the line between masts is determined by the tension applied to it, and the necessary tension is large, so that the end tensioners are substantial and expensive. The length of an individual line 8 is limited. Its ends are anchored either to a fixture at ground level or to a mast which is braced to withstand the line tension. Of course in the case of one of the ends this is done through the end tensioner. The ends of adjacent lines overlap, as seen in region 9 of Figure 2, to provide continuity of supply to the vehicle.

A line tensioner is disclosed in Luppi J et al, "Histoire de la Catenaire 25kV", Revue Generale des Chemins de Fer, Centrale des Revues, Dunod-Gauthier-Villars, Paris, FR, no. 3, 1 March 1992, pages 35-52, XP000262989, ISSN 0035-3183. It uses a pair of pulleys blocks around which a line, carrying a weight, is passed multiple times to provide mechanical advantage. The electric line itself is anchored to one of the pulley blocks, which thus pulls on the line in a direction along the line's length.

Prior art document CH 249 538 A discloses a suspension device for an electrical contact line. This tensioning device comprising means for applying a tensioning force along a direction transverse to the overhead line and thereby creating a tension in it, wherein the overhead line is suspended by means of hangers at intervals along its length, each hanger having an upper fixed part coupled to a supporting structure and a lower free part through which it is coupled to the overhead line, wherein the relative positions of the fixed parts of the hangers are such that the fixed parts of the hangers are offset from the line along a direction transverse to the line, the line thereby being laterally stabilised without provision of additional means for restraining transverse motion of the free parts of the hangers.

Prior art document GB 2 096 836 A discloses a guy means for an elevated metallic structure comprises a dielectric synthetic fibre rope. A terminal means is attached to one end of the rope for connecting the rope to the elevated structure. The terminal means includes a potting head in which splayed fibres of the rope are encapsulated in potting material to attach the terminal means to the end of the rope. A corona discharge means is attached to the potting head and disposed annularly around the synthetic rope where the rope enters the potting head to reduce the likelihood of a corona discharge near the rope surface which may cause the rope to burn through and part.; The corona discharge means may be a metal toroid connected to the potting head by an electrical conductor, a bell- mouth extension of the neck of the potting head, or a bell-mouth extension of the neck of the potting head in which the inside arc of the bell-mouth is continued through substantially three-quarters of a circle to create a collar around the potting head neck.

Prior art document EP 0 489 627 A discloses a device permitting overhead electrical feeding of vehicles running on a railway line, comprising a flexible cable which is horizontally retractable parallel to the railway line, this cable being mounted at the end of brackets which are mutually parallel and pivoting simultaneously by about a quarter of a revolution. The present invention also relates to an overhead electrical feeding line comprising such a device and, at each end, another suspended cable providing the junction with a catenary line of the grid. Application to the feeding of railway lines passing through a handling and storage area.

The investment involved in creating an overhead line system is very large and there are important commercial incentives to economise, to simplify installation and to reduce the parts count.

The present invention concerns an overhead line installation according to the independent claim 1.

Preferably the tensioning device comprises a suspended mass whose weight is referred to the overhead line to provide the tensioning force. The mass is preferably suspended through a cord connected to the line. Both ends of the overhead line may be anchored, directly or indirectly, to the earth with the tensioning device acting on a part of the line between its ends.

The hangers are preferably supported through respective masts, the sole coupling between the line and at least some of the masts being made through the hanger. The masts may be simple wooden poles, although in principle metal structures could be used. An economical embodiment uses a lateral bracket arm projecting from the mast to support the hangers above the rails, but again other constructions are possible. For example some known masts are themselves curved at their upper ends, so allowing the bracket arms to be dispensed with.

It is particularly preferred that some of the hangers are offset to one side of the line and others are offset to the opposite side. Still more particularly, the offsets form an alternating pattern to one side of the line and the other. This pattern is appropriate along straight sections of track, but on curves it can be appropriate instead to place all of the hangers to the outside of the curve.

The offset may alternate from one hanger to the next (i.e. it has a repeat interval equal to two hangers). Alternatively, the offset may alternate from one side of the line to the other with a pattern whose repeat interval is more than two hangers.

In a preferred embodiment, each hanger has two limbs forming an inverted "V" shape. The hangers preferably comprise synthetic rope.

According to the invention the device comprises a suspended mass whose weight is referred to the line to provide the transverse force. The mass may be suspended through a cord connected to the line.

Specific embodiments of the present invention will now be described, by way of example only, with reference to the accompanying drawings, in which:-
Figure 1 is a schematic representation of a conventional mast and suspension arrangement for an overhead line, viewed from one side;
Figure 2 is a schematic representation of a conventional overhead line installation, viewed from above;
Figure 3a is a schematic representation of a mast and suspension arrangement embodying the present invention, viewed along the length of the line, and Figure 3b represents the same arrangement viewed along a direction perpendicular to the line;
Figure 4 is a more detailed representation of the suspension arrangement of the Figure 3 embodiment, viewed from one side;
Figure 5 is a schematic representation of a first overhead line installation embodying the present invention, viewed from above;
Figure 6 is a schematic representation of a second overhead line installation embodying the present invention, viewed from above;
Figure 7 is a schematic representation of a tensioning arrangement embodying an aspect of the present invention, viewed from one side.

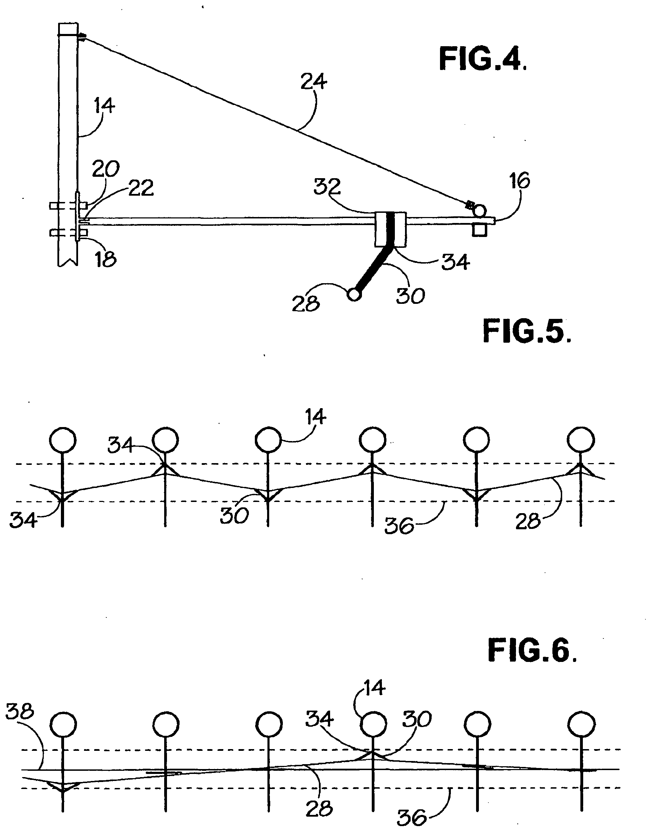

The arrangement illustrated in Figures 3 and 4 has an upright mast 14 formed as a simple wooden pole whose lower end is buried in the ground to a depth in the region of 2 metres. The mast serves to support a bracket arm 16 which in the present embodiment is a steel tube whose inner end is coupled to the mast by means of a junction plate 18 secured to the mast 14 by through-going bolts 20 and having a laterally projecting collar 22 which receives the bracket arm's inner end. This coupling is not required to withstand loading on the bracket arm in cantilever fashion, such loading instead being borne by a diagonal stay 24 led from an eye bolt 26 near the outer end of the bracket arm 16 to a loop 26 around the mast 14, the loop being above the coupling 18,20,22. In the present example the stay is formed of stainless steel rope. The resulting structure is robust but simple and economical to make.

The power supply line itself is indicated at 28 and is a metal member having a substantial cross section commensurate with the large current it carries. The line has a cross section (which is conventional and is not illustrated herein) which is circular but for a pair of recesses to be gripped from above by "ear clamps", leaving the underside of the line, which makes contact with the vehicle-mounted terminal, uninterrupted.

These aspects are well known and need not be described further herein.

The line 28 is suspended from the bracket arm 16 by means of a hanger 30. In principle this could take a number of different forms. In the present embodiment it is formed as a flexible strop. The hanger serves to electrically isolate the line and to this end is formed from insulating material. The material used in the present embodiment is a synthetic rope. A suitable rope is manufactured by Linear Composites Ltd under the registered trade mark *Parafil.* In the illustrated embodiment the hanger comprises two limbs which, viewed in a direction across the line 28, form an inverted "V" shape. At its mid-point the hanger is passed over the bracket arm 16 and its location along the arm is fixed by a location ring 32. The upper part 34 of the hanger, through which it is itself suspended from the bracket arm, will be referred to as its "fixed part".

Note from Figures 3a and 4 that, viewed in a direction along the length of the line 28, the hanger is inclined to the vertical. That is, the fixed part of the hanger is horizontally offset from the line 28. To appreciate why, consider Figure 5, which shows part of an overhead line installation, comprising multiple masts 14 alongside railway or tram tracks 36, supporting the line 28 above the tracks. Note that the fixed parts 34 of the hangers 30 do not lie on a straight path or a fair curve following the line of the tracks. Instead they are offset from such a notional fair path in an alternating pattern, first to one side of the path and then to the other. The line 28 is caused to adopt a corresponding wave or zig-zag path. The line 28 of course tends to straighten itself, in order to take the shortest possible route, but this tendency is resisted by a horizontal force applied to the line 28 by the hangers 30: the tension in the hangers has a horizontal component because of their inclination to the vertical. The fixed parts 34 of the hangers thus lie outside the path adopted by the line 28, as seen in the drawing.

The offsetting of the hangers from the fair path (and from the line itself) serves to laterally stabilise the line 28 - that is, to reduce its tendency to move from side-to-side in pendulum fashion under the influence of wind etc. As a result no other means for lateral stabilisation need be, or is, provided. Specifically, the stabilising arm 10 of the prior art suspension arrangement (Figure 1) is dispensed with. As noted above, in such prior art arrangements the line would typically be caused to adopt a "zig-zag" path, but this is not because the hangers are inclined. The path is instead defined by the effect of the stabilising arms 10.

Note that where the tracks 36 - and hence the fair path to which the line approximates - is curved, the offset of the hangers need not follow an alternating pattern. The necessary inclination of the hangers can be achieved by offsetting several successive hangers to the outside of the curve.

Figure 5 shows a pattern in which the hangers 30 are offset to opposite sides of the line on successive masts 14, but other alternating patterns, with a longer "wavelength", may instead be used. Figure 6 shows an example with a wavelength equal to six times the separation between neighbouring masts. The inclination of the line 28 to the notional fair path 38 is thereby reduced, and the significance of this will be explained shortly.

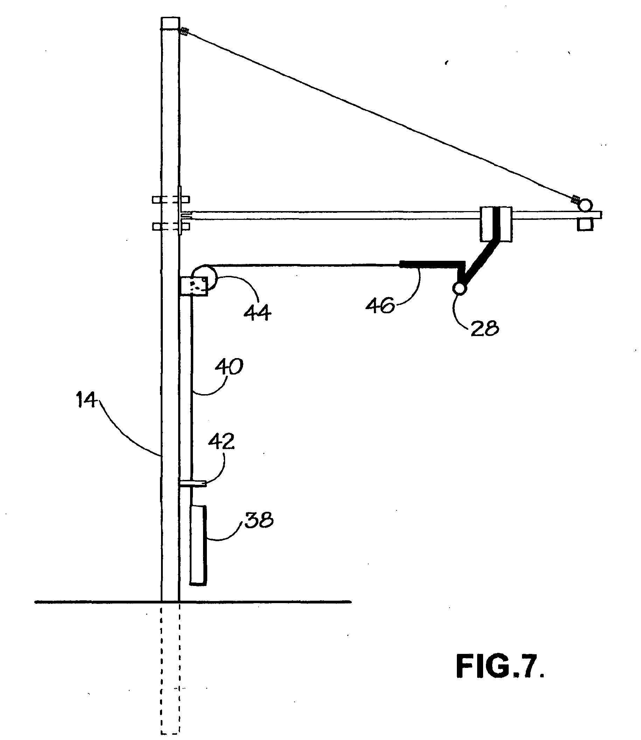

As noted above, a large tension must be applied to the line 28 to prevent it from sagging excessively between masts. Figure 7 shows a suspension arrangement which is similar to that of Figures 3 and 4 but differs in that it additionally comprises a tensioning arrangement in which the tensioning force is applied not along the length of the line, but transversely to it. A mass 38 is suspended alongside the mast 14 from a cord 40 which is led up the mast, through an eyelet 42, to a pulley 44 carried on a bracket mounted upon the mast 14 at approximately the same height as the line 28. Having passed over the pulley, the cord is 1 ed to a positioning bracket 46 through which it is coupled to the line 28. Hence a transverse force equal to the weight 38 is applied to the line 28. The tension required in the line to withstand this lateral force is of course very much greater than the weight of the mass 38. The relationship between the line tension and the transverse force on the line depends on the sine of the angle by which the line is caused to deviate from its fair path. Now the significance of the long wavelength pattern seen in Figure 6 should be apparent. It serves to reduce this angle, and hence to increase the line tension. In practice a mass of as little as 50 to 100 kilograms is found to be sufficient (although it must be clearly understood that the invention is not limited to any particular mass). Ends of the line 28 are of course anchored in some way, e.g. by being led to fixtures at ground level.

## Claims

1. An overhead line installation comprising a tensioning device for an overhead line (28) for providing electric power to a vehicle, the tensioning device comprising means for applying a tensioning force along a direction transverse to the overhead line comprising a suspended mass (38) whose weight is referred to the overhead line to provide the tensioning force and thereby creating a tension in it, wherein the overhead line is suspended by means of hangers (30) at intervals along its length, each hanger having an upper fixed part coupled to a supporting structure and a lower free part through which it is coupled to the overhead line, wherein the relative positions of the fixed parts of the hangers are such that the fixed parts of the hangers are offset from the line along a direction transverse to the line, the line thereby being laterally stabilised without provision of additional means for restraining transverse motion of the free parts of the hangers.

2. An overhead line installation as claimed in claim 1 in which the mass is suspended through a cord (40) connected to the line.

3. An overhead line installation as claimed in any preceding claim in which both ends of the overhead line are anchored, directly or indirectly, to the earth and the tensioning device acts on a part of the line between its ends.

4. An overhead line installation as claimed in claim 1 in which the hangers are supported through respective masts (14), the sole coupling between the line and at least some of the masts being made through the hanger.

5. An overhead line installation as claimed in claim 1 to claim 4, in which some of the hangers are offset to one side of the line and others are offset to the opposite side.

6. An overhead line installation as claimed in claim 2 in which the offsets form an alternating pattern to one side of the line and the other.

7. An overhead line installation as claimed in claim 6 in which the offset alternates from one hanger to the next.

8. An overhead line installation as claimed in claim 7 in which the offset alternates from one side of the line to the other with a pattern whose repeat interval is more than two hangers.

9. An overhead line installation as claimed in claim 1 to claim 4 wherein, when a path of the line is curved, the offset of successive hangers is on the outside of the curve.

10. An overhead line installation as claimed in any of claims 1 to 9 in which each hanger has two limbs forming an inverted "V" shape.

11. An overhead line installation as claimed in any preceding claim in which the hangers comprise synthetic rope.

12. An overhead line installation as claimed in any of claims 1 to 11 in which the supporting structure comprises an upright mast carrying a laterally projecting bracket arm (16) or a transverse span rope.

13. An overhead line installation as claimed in any of claims 1 to 12 in which a brace leads diagonally upwards from an outboard part of the bracket arm to the mast.

## Patentansprüche

1. Oberleitungsinstallation, umfassend eine Spannvorrichtung für eine Oberleitung (28) zum Bereitstellen von elektrischem Strom für ein Fahrzeug, wobei die Spannvorrichtung ein Mittel zum Ausüben einer Spannkraft entlang einer Richtung quer zu der Oberleitung umfasst, das eine aufgehängte Masse (38) umfasst, deren Gewicht auf die Oberleitung übertragen wird, um die Spannkraft bereitzustellen, und dadurch eine Spannung darin zu erzeugen, wobei die Oberleitung mittels Hängern (30) in Abständen entlang ihrer Länge aufgehängt ist, wobei die Hänger jeweils einen oberen, feststehenden Teil, der an eine Tragkonstruktion gekoppelt ist, und einen unteren, freien Teil, über den sie jeweils an die Oberleitung gekoppelt sind, aufweisen, wobei die relativen Lagen der feststehenden Teile der Hänger derart sind, dass die feststehenden Teile der Hänger in einer Richtung quer zu der Leitung von der Leitung versetzt sind, wobei die Leitung dadurch ohne Bereitstellung von zusätzlichen Mittel zum Einschränken der Querbewegung der freien Teile der Hänger seitlich stabilisiert wird.

2. Oberleitungsinstallation nach Anspruch 1, wobei die Masse über eine mit der Leitung verbundene Leine (40) aufgehängt ist.

3. Oberleitungsinstallation nach einem der vorangehenden Ansprüche, wobei beide Enden der Oberleitung direkt oder indirekt am Boden verankert sind und die Spannvorrichtung auf einen Teil der Leitung zwischen ihren Enden wirkt.

4. Oberleitungsinstallation nach Anspruch 1, wobei die Hänger über jeweilige Masten (14) getragen werden, wobei die einzige Kopplung zwischen der Leitung und mindestens einigen der Masten über den Hänger erfolgt.

5. Oberleitungsinstallation nach Anspruch 1 bis Anspruch 4, wobei einige der Hänger nach einer Seite der Leitung versetzt sind und die anderen nach der gegenüberliegenden Seite versetzt sind.

6. Oberleitungsinstallation nach Anspruch 2, wobei die Versätze ein abwechselndes Muster nach einer Seite der Leitung und der anderen bilden.

7. Oberleitungsinstallation nach Anspruch 6, wobei der Versatz von einem Hänger zum nächsten wechselt.

8. Oberleitungsinstallation nach Anspruch 7, wobei der Versatz von einer Seite der Leitung zu der anderen mit einem Muster wechselt, dessen Wiederholungsintervall mehr als zwei Hänger beträgt.

9. Oberleitungsinstallation nach Anspruch 1 bis Anspruch 4, wobei, wenn ein Verlauf der Leitung gekrümmt ist, der Versatz aufeinanderfolgender Hänger auf der Außenseite der Krümmung ist.

10. Oberleitungsinstallation nach einem der Ansprüche 1 bis 9, wobei die Hänger jeweils zwei Glieder aufweisen, die eine umgekehrte "V"-Form bilden.

11. Oberleitungsinstallation nach einem der vorangehenden Ansprüche, wobei die Hänger Kunststoffseil umfassen.

12. Oberleitungsinstallation nach einem der Ansprüche 1 bis 11, wobei die Tragkonstruktion einen aufrechten Mast umfasst, der einen seitlich vorstehenden Konsolenarm (16) oder ein Seil mit querlaufender Spanne trägt.

13. Oberleistungsinstallation nach einem der Ansprüche 1 bis 12, wobei eine Strebe von einem außenliegenden Teil des Konsolenarms diagonal nach oben zu dem Mast führt.

## Revendications

1. Installation de lignes électriques aériennes comportant un dispositif de tension pour une ligne électrique aérienne (28) servant à fournir une alimentation électrique à un véhicule, le dispositif de tension comportant un moyen servant à appliquer une force de tension le long d'une direction transversale par rapport à la ligne électrique aérienne comportant une masse suspendue (38) dont le poids est communiqué à la ligne électrique aérienne pour fournir la force de tension et pour de ce fait créer une tension dans celle-ci, dans laquelle la ligne électrique aérienne est suspendue au moyen de pendules (30) selon des intervalles le long de sa longueur, chaque pendule ayant une partie fixe supérieure accouplée à une structure de support et une partie libre inférieure au travers de laquelle elle est accouplée à la ligne électrique aérienne, dans laquelle les positions relatives des parties fixes des pendules sont telles que les parties fixes des pendules sont décalées par rapport à la ligne électrique le long d'une direction transversale par rapport à la ligne électrique, la ligne électrique étant de ce fait stabilisée dans le sens latéral sans qu'il ne faille des moyens supplémentaires pour limiter tout mouvement transversal des parties libres des pendules.

2. Installation de lignes électriques aériennes selon la revendication 1, dans laquelle la masse est suspendue par le biais d'une corde (40) raccordée à la ligne électrique.

3. Installation de lignes électriques aériennes selon l'une quelconque des revendications précédentes, dans laquelle les deux extrémités de la ligne électrique aérienne sont ancrées, directement ou indirectement, à la terre et le dispositif de tension agit sur une partie de la ligne électrique entre ses extrémités.

4. Installation de lignes électriques aériennes selon la revendication 1, dans laquelle les pendules sont supportés par le biais de mâts respectifs (14), le seul accouplement entre la ligne électrique et au moins certains des mâts étant réalisé par le biais du pendule.

5. Installation de lignes électriques aériennes selon les revendications 1 à 4, dans laquelle certains des pendules sont décalés vers un côté de la ligne électrique et d'autres sont décalés vers le côté opposé.

6. Installation de lignes électriques aériennes selon la revendication 2, dans laquelle les décalages forment un agencement qui se fait de manière alternée vers un côté de la ligne électrique et vers l'autre.

7. Installation de lignes électriques aériennes selon la revendication 6, dans laquelle le décalage se fait de manière alternée d'un pendule au suivant.

8. Installation de lignes électriques aériennes selon la revendication 7, dans laquelle le décalage se fait de manière alternée d'un côté de la ligne électrique à l'autre selon un agencement dont l'intervalle de répétition est supérieur à deux pendules.

9. Installation de lignes électriques aériennes selon les revendications 1 à 4, dans laquelle, lorsqu'une trajectoire de la ligne électrique est courbée, le décalage des pendules successifs se trouve du côté extérieur de la courbe.

10. Installation de lignes électriques aériennes selon l'une quelconque des revendications 1 à 9, dans laquelle chaque pendule a deux branches formant une forme en « V » inversé.

11. Installation de lignes électriques aériennes selon l'une quelconque des revendications précédentes, dans laquelle les pendules comportent un câble synthétique.

12. Installation de lignes électriques aériennes selon l'une quelconque des revendications 1 à 11, dans laquelle la structure de support comporte un mât vertical portant un bras à console faisant saillie dans le sens latéral (16) ou un câble d'apiquage transversal.

13. Installation de lignes électriques aériennes selon l'une quelconque des revendications 1 à 12, dans laquelle une contrefiche s'étend diagonalement vers le haut depuis une partie extérieure du bras à console jusqu'au mât.
